# EUROPEAN PATENT SPECIFICATION

(11) **EP 3 812 619 B1**
(45) Date of publication and mention of the grant of the patent: **11.05.2022**
(21) Application number: 20202034.3
(22) Date of filing: 15.10.2020
(51) Int. Cl.: B62J 43/16, B62J 11/19, B62K 11/04, B62M 7/04, B60R 16/02

(54) **STRADDLED ELECTRIC VEHICLE**
ELEKTRISCHES SATTELFAHRZEUG
VÉHICULE ÉLECTRIQUE À ENFOURCHER

(30) Priority: 21.10.2019 JP 2019192189
(43) Date of publication of application: 28.04.2021
(73) Proprietor: YAMAHA HATSUDOKI KABUSHIKI KAISHA, Iwata-shi Shizuoka 438-8501 (JP)
(72) Inventor: MOMOI, Masayuki, Iwata-shi, Shizuoka 438-8501 (JP); NAKAMURA, Kazuto, Iwata-shi, Shizuoka 438-8501 (JP); YAZAKI, Katsuya, Iwata-shi, Shizuoka 438-8501 (JP)
(74) Representative: Grünecker Patent- und Rechtsanwälte PartG mbB

(56) References cited:
- JP-A- 2006 182 315
- US-A1- 2012 000 720

## Description

The present invention relates to a straddled electric vehicle according to the preamble of independent claim 1. Such a straddled electric vehicle can be taken from the prior art document JP 2006 182315 A.

An electric two-wheeled vehicle has an electric motor, a battery, and a drive circuit. The electric motor and the drive circuit are electrically connected to each other with a power cable, and the drive circuit utilizes the power of the battery to provide power to the electric motor in response to the driver's accelerator operation. The electric two-wheeled vehicle disclosed in JP 2005-201357 A includes a case that houses the electric motor behind the battery. This case contains the drive circuit including the circuit composed of semiconductor switching elements, such as FET (Field Effect Transistor).

Unlike the electric two-wheeled vehicle of JP 2005-201357 A, in a vehicle accommodating a drive circuit and an electric motor in separate cases, the work of mounting the drive circuit to the body frame and the work of mounting the electric motor to the body frame can be separately performed. However, sometimes the drive circuit and the electric motor need to be connected to each other with a power cable for inspection or other purposes before the drive circuit and the electric motor are mounted on the body frame. In that case, in a situation where the drive circuit and the electric motor are connected with the power cable, the work of mounting the drive circuit on the body frame and the work of mounting the electric motor on the body frame are sequentially performed. These works are restricted by the length of the power cable, which makes it difficult to assure good workability.

It is the object of the present invention to provide a straddled electric vehicle that assures good workability. According to the present invention said object is solved by a straddled electric vehicle having the features of independent claim 1. Preferred embodiments are laid down in the dependent claims.
(1) According to the invention a straddled electric vehicle includes a battery, a motor unit including an electric motor and a case containing the electric motor, a motor drive unit including a drive circuit and a case containing the drive circuit, the drive circuit supplying power to the electric motor by utilizing power of the battery, and a first cable harness for electrically connecting the electric motor and the drive circuit and sending the power of the battery from the drive circuit to the electric motor. The motor unit is disposed behind the motor drive unit, and the first cable harness has, in a middle thereof, a portion located forward than a front surface of the motor drive unit. According to the straddled electric vehicle, the workability of mounting the motor drive unit and the motor unit to the vehicle body can be improved.
(2) In the straddled electric vehicle of (1), the motor drive is disposed behind the battery, and the portion of the first cable harness overlaps the battery in a side view of a vehicle body. This structure allows for a compact layout of the motor unit, the motor drive unit, and the battery, which are aligned in the longitudinal direction.
(3) In the straddled electric vehicle of (1), the first cable harness may include a plurality of power cables, the portion of the first cable harness may be curved, and a radius of curvature of the portion may be greater than three times a diameter of each power cable. This structure can prevent a large load on the power cables due to the curvature.
(4) In the straddled electric vehicle of (1), the first cable harness may include a foremost portion in the portion of the first cable harness, the first cable harness may include a first end portion connected to the motor drive unit and a second end portion connected to the motor unit, and a distance between a vertical surface passing through the foremost portion and a vertical surface passing through the first end portion may be longer than a distance between the vertical surface passing through the first end portion and a vertical surface passing through the second end portion. This structure allows for a sufficient length of the first cable harness.
(5) In the straddled electric vehicle of (1), the first cable harness may include a portion that is curved over 180 degrees, and at least a part of the curved portion may be located forward than a front surface of the case of the motor drive unit.
(6) In the straddled electric vehicle of (1), the first cable harness may include a first end portion connected to the motor drive unit and a second end portion connected to the motor unit, and the second end portion may be located behind the first end portion in a side view of the vehicle body. This structure can reduce a linear distance between the first end portion and the second end portion, and a margin of the length of the first cable harness is relatively increased.
(7) In the straddled electric vehicle of (1), the motor drive unit may be disposed behind the battery, each of the motor drive unit and the battery may include a side surface facing in a first direction, which is one of a right direction and a left direction, the first cable harness may be connected to a connector provided on the side surface of the motor drive unit, and the side surface of the motor drive unit may be located closer to a center of the vehicle body in a left-right direction than the side surface of the battery. This structure can prevent a vehicle width from increasing due to the first cable harness protruding from the side surface of the motor drive unit.
(8) In the straddled electric vehicle of (7), the motor unit may include a portion that is located in the first direction than the side surface of the motor drive unit, and the first cable harness may extend forward from the portion of the motor unit in a plan view of the vehicle body. This structure can prevent the first cable harness extending forward from interfering with the motor drive unit.
(9) In the straddled electric vehicle of (7), a center of the motor drive unit in the left-right direction of the vehicle body may be offset in the second direction from a center of the battery in the left-right direction of the vehicle body.
(10) The straddled electric vehicle of (1) may further include a second cable harness for electrically connecting the drive circuit and the battery and sending power of the battery to the drive circuit. The first cable harness and the second cable harness may be located in a same direction from the center of the vehicle body in the left-right direction, and one of the first cable harness and the second cable harness may be located outward in the left-right direction from the other cable harness, may intersect the other cable harness in the side view of the vehicle body, and may be clamped. According to this, one of the cable harnesses can restrict a positional change of the other cable harness.
(11) In the straddled electric vehicle of (10), the one of the cable harnesses may be clamped to the battery.
(12) In the straddled electric vehicle of (10), a position where the one of the cable harnesses and the other cable harness intersect may be located rearward than the battery. This structure can prevent the position of the first cable harness from changing outward at the position located rearward than the battery (the position where there is no part for clamping the first cable harness).
(13) The straddled electric vehicle of (1) may further include a second cable harness for electrically connecting the drive circuit and the battery and sending power of the battery to the drive circuit. Each of the motor drive unit and the battery may include a side surface facing a first direction, which is one of a right direction and a left direction. The first cable harness may be connected to the side surface of the motor drive unit, and the second cable harness may be connected to the side surface of the motor drive unit and the side surface of the battery.

### BRIEF DESCRIPTION OF THE DRAWINGS

FIG. 1 is a side view illustrating an example of a straddled electric vehicle proposed in the present disclosure;
FIG. 2 is a side view of an entire vehicle body without a vehicle cover;
FIG. 3 is a right side view of a battery, a motor drive unit, and a motor unit that are mounted on a body frame;
FIG. 4A is a plan view of the body frame;
FIG. 4B is a rear view of the body frame;
FIG. 5 is a perspective view of the battery, the motor drive unit, and the motor unit;
FIG. 6 is a left side view of the battery, the motor drive unit, and the motor unit. In FIG. 6, an air guide shown in FIG. 5 covering the back of the motor drive unit is omitted;
FIG. 7 is a right side view of the battery, the motor drive unit, and the motor unit;
FIG. 8 is a plan view of the motor drive unit and the motor unit;
FIG. 9 is a perspective view illustrating the right side of the motor drive unit and the motor unit;
FIG. 10 is an exploded perspective view of the motor drive unit and the air guide;
FIG. 11 is a rear view of the motor drive unit and the air guide;
FIG. 12 is a perspective view illustrating a variation of the air guide; and
FIG. 13 is a perspective view of the air guide according to the variation in FIG. 12 viewed from the diagonally rear side.

### DETAILED DESCRIPTION OF THE PRESENT TEACHING

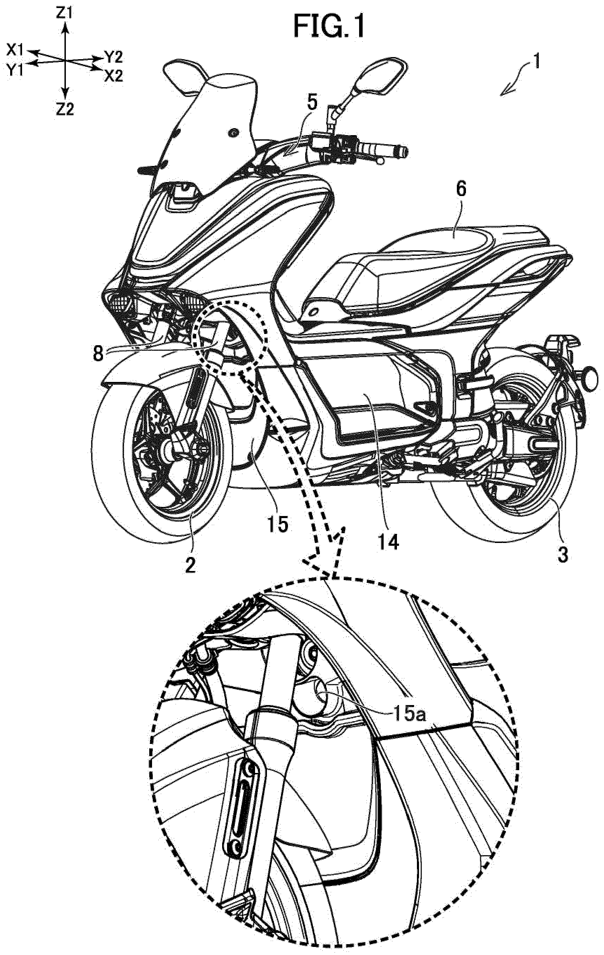

In the following, a straddled electric vehicle proposed in this embodiment will be described. In this specification, as an example of a straddled electric vehicle, an electric two-wheeled vehicle 1 shown in drawings such as FIG. 1 will be described. The straddled electric vehicle may be a four-wheeled or three-wheeled electric vehicle having a seat on which a rider straddles and sits.

The terminology used herein is for the purpose of describing particular embodiments. As used herein, the term "and/or" includes any and all combinations of one or more of the associated listed items. As used herein, the singular forms "a," "an," and "the" are intended to include the plural forms as well as the singular forms, unless the context clearly indicates otherwise. It will be further understood that the terms "comprises", "comprising", "includes", and/or "including", when used in this specification, specify the presence of stated features, steps, operations, elements, and/or components, but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which the present teaching belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the present teaching, it will be understood that a number of technologies are disclosed.

In the following description, for purposes of explanation, numerous specific details are set forth in order to provide a thorough understanding of the present teaching.

The present disclosure is to be considered as an exemplification of the present teaching.

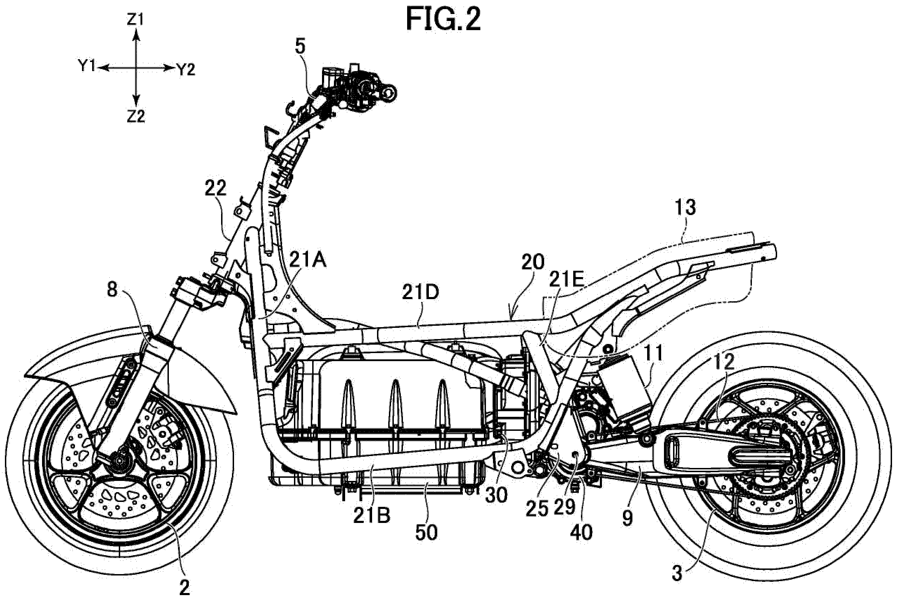

In the drawings such as FIG. 1, directions indicated by X1 and X2 are referred to as a right direction and a left direction, respectively, and directions indicated by Z1 and Z2 are referred to as an upward direction and a downward direction, respectively. The directions Y1 and Y2 shown in FIG. 2 are referred to as a forward direction and a rearward direction, respectively. Further, the direction indicated by X1-X2 is referred to as a vehicle width direction or a vehicle left-right direction. The direction indicated by Y1-Y2 is referred to as a vehicle longitudinal direction or a vehicle front-rear direction. The direction indicated by Z1-Z2 is referred to as a vehicle vertical direction or a vehicle up-down direction.

### [Outline of vehicle body]

As shown in FIG. 2, the electric two-wheeled vehicle 1 has a front wheel 2, a rear wheel 3, a steering handle 5 for steering the front wheel 2, and a seat 6 (see FIG. 1) disposed behind the steering handle 5. The electric two-wheeled vehicle 1 has a rear arm 9 connected to a body frame 20 via a pivot 29. The rear portion of the rear arm 9 is connected to the axle of the rear wheel 3. The electric two-wheeled vehicle 1 has a rear cushion 11 connected to the rear arm 9 and the body frame 20. The lower end of the rear cushion 11 is connected to the rear arm 9, and the upper end of the rear arm 9 is connected to the body frame 20 (more specifically, a frame rear portion 21C to be described later).

As shown in FIG. 2, the body frame 20 has, at its foremost portion, a head pipe 22 supporting a steering shaft to which the steering handle 5 is connected. The left and right front cushions 8 are connected to the lower portion of the steering shaft, and the front wheel 2 is supported by the lower end of the front cushions 8.

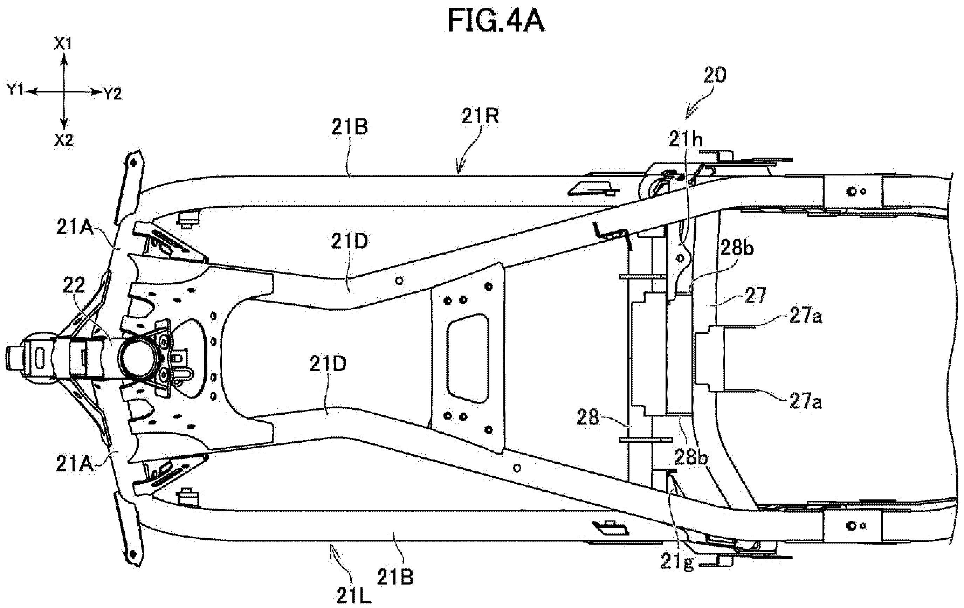

The body frame 20 has a right portion 21R (see FIG. 4A) and a left portion 21L (see FIG. 4A). As shown in FIG. 2, each of the right portion 21R and the left portion 21L includes a frame front portion 21A extending downward from the head pipe 22, a frame lower portion 21B extending rearward from the frame front portion 21A and disposed in the lower body, and a frame rear portion 21C extending obliquely rearward and upward from the frame lower portion 21B. The three portions 21A, 21B, and 21C may be formed of a single pipe, or a plurality of pipes connected to each other. The right portion 21R and the left portion 21L of the body frame 20 has a frame upper portion 21D. The frame upper portion 21D extends rearward from the middle of the frame front portion 21A, and is away upward from the frame lower portion 21B in a side view of the vehicle body. The upper portion of the frame rear portion 21C is connected to the rear portion of the frame upper portion 21D. The seat 6 is supported on the upper side of the rear portion of the frame upper portion 21D.

### [Outline of battery, motor drive unit, and motor unit]

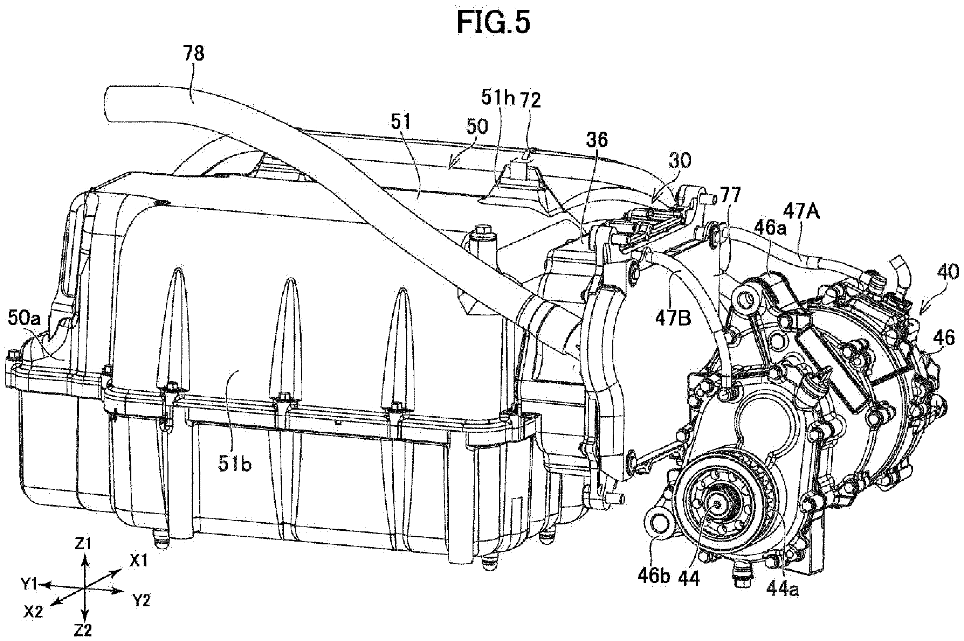

As shown in FIG. 5, the electric two-wheeled vehicle 1 includes a battery 50, a motor unit 40, and a motor drive unit 30.

The battery 50 includes a plurality of battery cells and a controller for controlling the charging and discharging of the battery 50. The battery 50 has a battery housing 51 containing the battery cells and the controller. The battery 50 is, for example, a lithium ion battery.

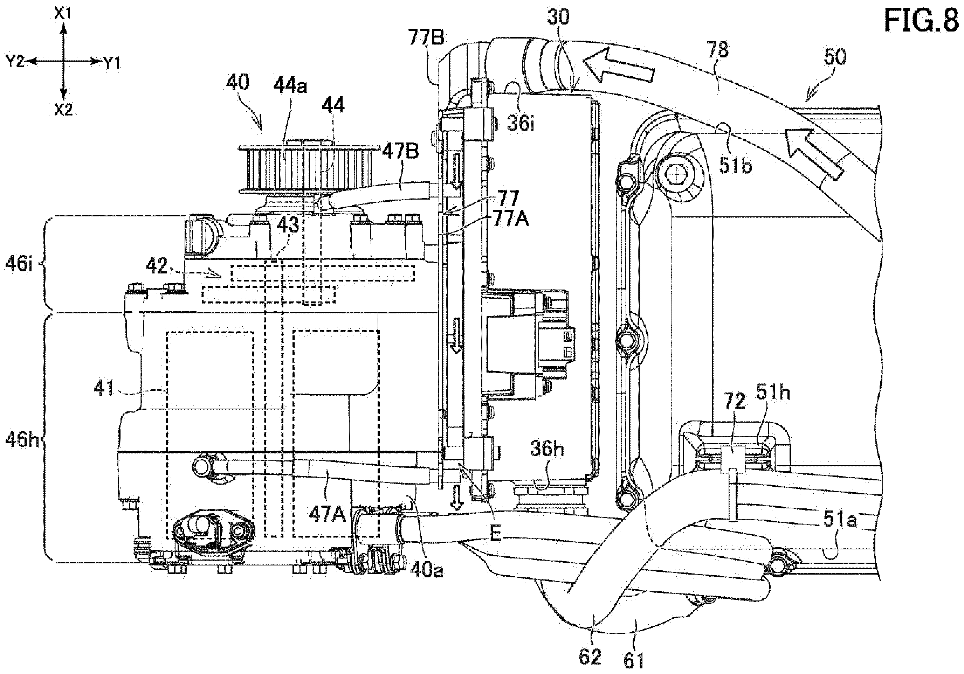

The motor unit 40 includes an electric motor 41 (see FIG. 8) and a case 46 containing the electric motor 41. The electric motor 41 is a driving source of the electric two-wheeled vehicle 1, and its rotation is transmitted to the rear wheel 3. In the example of the electric two-wheeled vehicle 1, the motor unit 40 has a speed reduction mechanism 42 (see FIG. 8). The speed reduction mechanism 42 is also housed in the case 46.

As shown in FIG. 8, the case 46 has, for example, a right housing portion 46h containing the electric motor 41 and a left housing portion 46i containing the speed reduction mechanism 42. The inside of the right housing portion 46h and the inside of the left housing portion 46i may be partitioned.

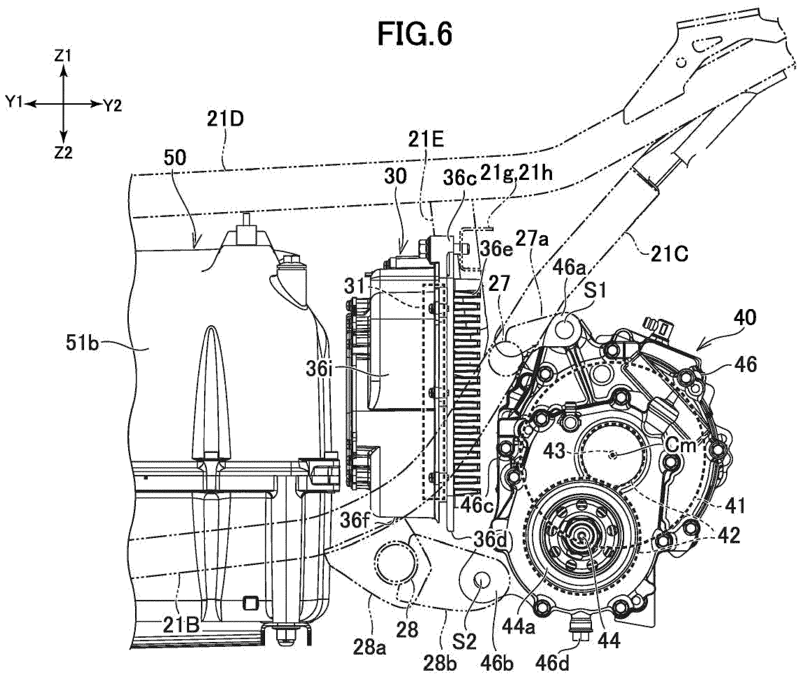

As shown in FIG. 6, the motor unit 40 includes a first rotation shaft 43 (see FIG. 8) at the rotation center Cm of the electric motor 41, and a second rotation shaft 44 (see FIG. 8) radially away from the first rotation shaft 43 of the electric motor 41. The speed reduction mechanism 42 is supported by the rotation shafts 43 and 44. The rotation of the electric motor 41 is input to the first rotation shaft 43. The speed reduction mechanism 42 reduces the rotation of the first rotation shaft 43 and transmits the rotation to the second rotation shaft 44.

The speed reduction mechanism 42 is a gear type, for example, and is composed of a gear supported by the first rotation shaft 43 and a gear supported by the second rotation shaft 44. The speed reduction mechanism 42 may be a belt type, for example. The speed reduction mechanism 42 may be a transmission capable of changing the reduction ratio.

The second rotation shaft 44 is, for example, an output shaft of the motor unit 40, and is connected to the rear wheel 3 via a rotation transmission component such as a belt, a chain, and a shaft. In the example of the electric two-wheeled vehicle 1, the rotation transmission component is a belt 12 (see FIG. 2), and a pulley 44a (see FIG. 5) for catching the foremost portion of the belt 12 is attached to the end of the second rotation shaft 44. The pivot 29 (see FIG. 2) supporting the rear arm 9 and the second rotation shaft 44 are aligned on the same axis.

The first rotation shaft 43 is coaxial with the rotation center Cm of the electric motor 41. The second rotation shaft 44 is positioned below the first rotation shaft 43. Further, the second rotation shaft 44 is positioned forward than the first rotation shaft 43. With this layout of the second rotation shaft 44, the distance from the second rotation shaft 44 to the axle of the rear wheel 3 (in other words, the length of the rear arm 9) can be increased without increasing the wheel base.

Unlike the example of the electric two-wheeled vehicle 1, the second rotation shaft 44 may be positioned directly below the first rotation shaft 43 or may be positioned rearward than the first rotation shaft 43. In yet another example, the motor unit 40 may not have the second rotation shaft 44.

The motor drive unit 30 includes a drive circuit 31 (see FIG. 6) and a case 36 containing the drive circuit 31. The drive circuit 31 uses the power of the battery 50 to supply electric power corresponding to the rider's accelerator operation (operation of the accelerator grip provided in the steering handle 5) to the electric motor 41. The electric motor 41 is an AC motor (e.g., three-phase AC motor). The drive circuit 31 includes an inverter, which converts the DC power output by the battery 50 to AC power of a frequency corresponding to the vehicle speed. The inverter is composed of a semiconductor switching device, such as FET (Field Effect Transistor).

The electric two-wheeled vehicle 1 may have a vehicle control unit (not shown) having a microprocessor or a memory. The vehicle control unit calculates a command value (current command value) based on the accelerator operation, and outputs a signal corresponding to the command value. The drive circuit 31 supplies power corresponding to the command value to the electric motor 41. The arrangement of the vehicle control unit is not particularly limited.

As shown in FIG. 2, the battery 50 is disposed at the center of the vehicle body. At least the front portion of the battery 50 is located forward than the seat 6 (see FIG. 1). In one example, the entire battery 50 is located forward than the seat 6. Alternatively, only the front portion of the battery 50 may be located forward than the seat 6, and the rear portion of the battery 50 may be located rearward than the seat 6. The height of the battery 50 is lower than the front end of the seat 6.

The motor unit 40 is located behind the battery 50 and below the seat 6. The motor drive unit 30 is positioned between the battery 50 and the motor unit 40. That is, the motor drive unit 30 is disposed rearward of the battery 50, and the motor unit 40 is disposed further rearward of the motor drive unit 30. In the example of the electric two-wheeled vehicle 1, the motor drive unit 30 is disposed such that the front and rear surfaces of the motor drive unit 30 are substantially perpendicular to the longitudinal direction of the vehicle body. Similarly, the battery 50 is disposed such that the rear surface of the battery 50 is also substantially perpendicular to the longitudinal direction of the vehicle body. The battery 50, the motor drive unit 30, and the motor unit 40 are positioned between the right portion 21R and the left portion 21L of the body frame 20 in a plan view of the vehicle body. The battery 50, the motor drive unit 30, and the motor unit 40 may be partially located outside the right portion 21R and the left portion 21L of the body frame 20.

### [Support of motor unit]

The motor unit 40 is supported by the body frame 20. As shown in FIG. 5, the motor unit 40 (more specifically, the case 46) may have an upper mounting portion 46a and a lower mounting portion 46b, which are attached to the body frame 20. The number of mounting portions of the motor unit 40 may be two, for example. As such, the motor unit 40 may not need to have a portion to be attached to the body frame 20 in an area located rearward than the two mounting portions 46a and 46b. This structure provides a large space behind the motor unit 40.

In the example of the electric two-wheeled vehicle 1, a storage case 13 (see FIG. 2) for housing the equipment such as a helmet may be disposed below the seat 6 and above the motor unit 40. The motor unit 40 does not have a portion to be attached to the body frame 20 in an area located rearward than the mounting portions 46a and 46b, and thus the depth of the storage case 13 can be increased at the rear side of the upper mounting portion 46a.

The component that utilizes the space between the motor unit 40 and the seat 6 may not be the storage case 13. For example, a spare battery may be disposed between the motor unit 40 and the seat 6. In this case, the capacity of the spare battery can be increased.

### [Position of upper mounting portion]

The upper surface of the case 46 may be curved to match the outer shape of the electric motor 41 in a side view of the vehicle body. The case 46 may have a convex portion protruding upward from its upper surface. The upper mounting portion 46a may be formed at an end portion of the convex portion. In the example of the electric two-wheeled vehicle 1, the upper mounting portion 46a may be a portion where a through-hole, into which a coupling shaft S1 (see FIG. 6) described later is inserted, is formed.

As shown in FIG. 6, the upper mounting portion 46a may be positioned forward than the rotation center Cm of the electric motor 41. That is, the upper mounting portion 46a may be forward from the vertical plane passing through the rotation center Cm. According to this structure, the position of the upper mounting portion 46a can be lowered as compared with the structure in which the upper mounting portion 46a is located directly above the rotation center Cm. As a result, the space between the seat 6 and the motor unit 40 (in the example of the electric two-wheeled vehicle 1, the space for the storage case 13) can be increased.

As shown in FIG. 6, the position of the upper mounting portion 46a may be lower than the upper end 36c of the motor drive unit 30. This structure can increase the capacity of the storage case 13 disposed in the space formed above the motor unit 40.

According to the above-described structure of mounting the motor unit 40, the space is provided behind the motor unit 40, and thus it is also possible to move the position of the rear cushion 11 forward. In the example of the electric two-wheeled vehicle 1, the upper end of the rear cushion 11 may be coupled to the body frame 20 at a position located forward than the rear wheels 3 and located rearward than the upper mounting portion 46a of the motor unit 40. As a result, when the electric two-wheeled vehicle 1 travels, the vibration acting on the rear portion of the frame upper portion 21D, which supports the seat 6, through the rear cushion 11 can be reduced. In the example of the electric two-wheeled vehicle 1, the upper end of the rear cushion 11 may be positioned above the motor unit 40 in a side view of the vehicle body. On the other hand, the lower end of the rear cushion 11 may be coupled to the rear arm 9 at a position forward than the rear wheel 3 and rearward than the motor unit 40. The position of the rear cushion 11 is not limited to the example shown in FIG. 2.

### [Support structure of upper and lower mounting portions]

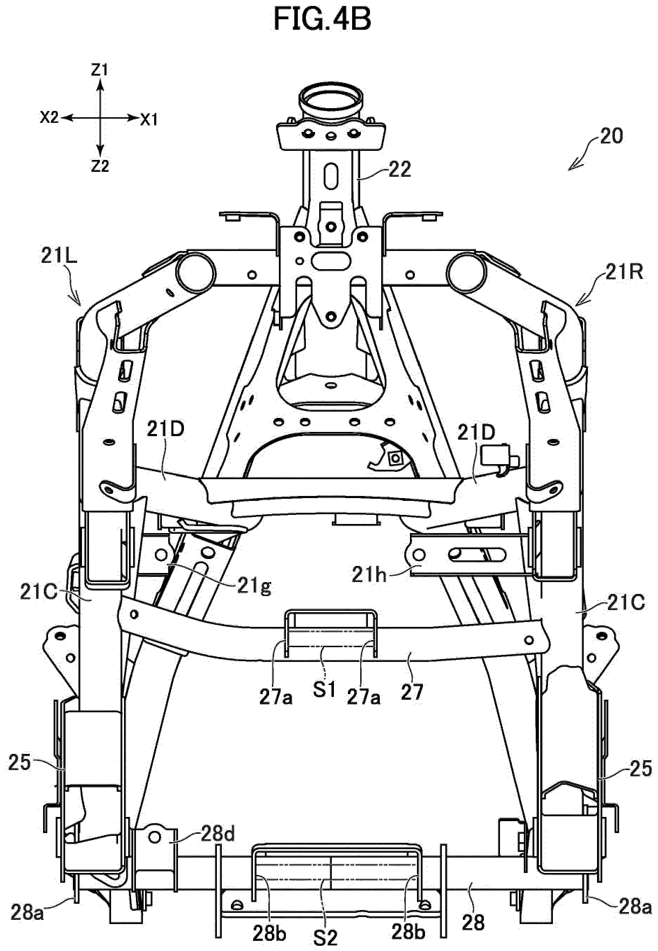

As shown in FIG. 4B, the body frame 20 may have cross portions 27 and 28, which are stretched between the right portion 21R and the left portion 21L of the body frame 20. The cross portions 27 and 28 may be separated in the vertical direction. The upper cross portion 27 may be stretched between the middle portions of the left and right frame rear portions 21C, for example. The lower cross portion 28 may be stretched between the lower portions of the left and right frame rear portions 21C (rear portions of the left and right frame lower portions 21B), for example. The motor unit 40 may be supported by the cross portions 27 and 28.

The left and right brackets 27a (see FIG. 4B) may be attached to the upper cross portion 27. The left and right brackets 27a may support the coupling shaft S1. The upper mounting portion 46a is cylindrical, and the coupling shaft S1 may be passed through the upper mounting portion 46a. In this manner, the upper mounting portion 46a is supported by the cross portion 27 via the coupling shaft S1 and the brackets 27a.

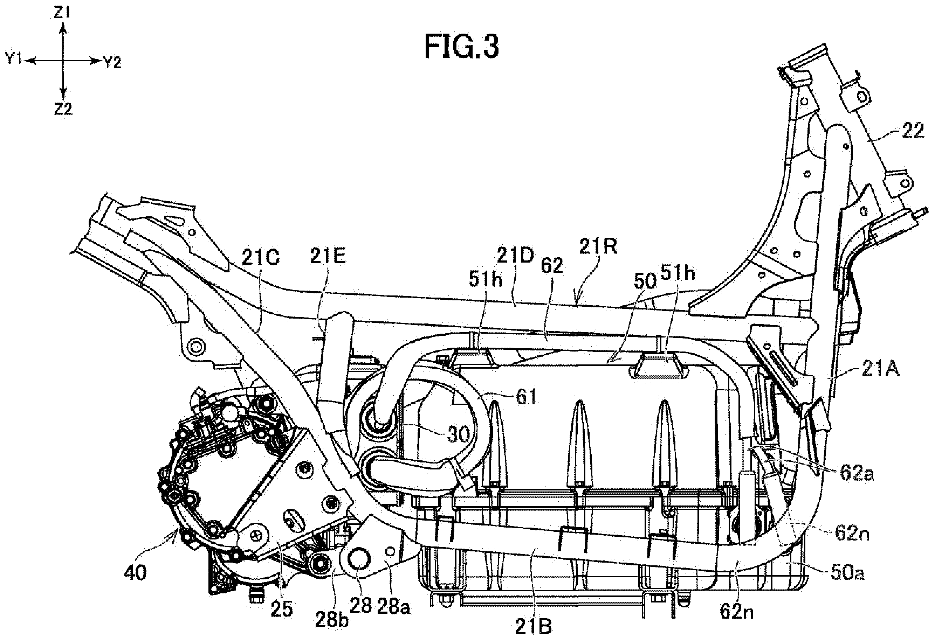

As shown in FIG. 6, the body frame 20 may have brackets 28a extending rearward obliquely and downwardly from the lower portion of the left and right frame rear portions 21C (in other words, the rear portion of the left and right frame lower portions 21B). The lower cross section 28 (see FIG. 3B) may be supported by left and right brackets 28a. The left and right brackets 28b (see FIG. 4B) extending rearward may be attached to the lower cross portion 28. The left and right brackets 28b may support the coupling shaft S2. The case 46 of the motor unit 40 may have a convex portion projecting obliquely forward and downward from the lower portion of its front surface 46c. The lower mounting portion 46b may be formed at the end portion of the convex portion. The lower mounting portion 46b has a through hole formed therein, and the coupling shaft S2 may be provided through the lower mounting portion 46b. In this manner, the lower mounting portion 46b can be supported by the cross portion 28 via the brackets 28b and the coupling shaft S2.

The lower portion of the frame rear portion 21C may be fixed to brackets 25 for supporting the pivot 29 (see FIG. 2) of the rear arm 9. The brackets 25 may extend rearwardly from the lower portion of the frame rear portion 21C. In a side view of the vehicle body, the upper cross section 27 may be positioned above the brackets 25. The lower cross section 28 may be located below and forward of the brackets 25. The stiffness of the portion of the body frame 20 where the brackets 25 are provided can be increased by the cross sections 27 and 28.

### [Position of the lower mounting portion]

The lower portion of the case 46 of the motor unit 40 may be curved to match the outer shape of the gear disposed on the second rotation shaft 44. The lower mounting portion 46b may be positioned forward than the rotation center of the second rotation shaft 44. This structure enables the lower mounting portion 46b to be positioned higher as compared with the structure in which the lower mounting portion 46b is positioned below the second rotation shaft 44. As a result, while ensuring the minimum ground height of the vehicle body, the position of the motor unit 40 can be lowered, and the capacity of the storage case 13 can be thereby increased.

As described above, the lower mounting portion 46b may be formed at the end of the convex portion projecting obliquely forward and downward from the front surface 46c of the case 46. Accordingly, the position of the lower mounting portion 46b may be forward than the front surface 46c of the case 46 of the motor unit 40. Further, the entire convex portion at which the lower mounting portion 46b is formed may be positioned forward than the rotation center of the second rotation shaft 44. Alternatively, the bottom of the convex portion may be positioned below the rotation center of the second rotation shaft 44, and the front end of the convex portion (i.e., the lower mounting portion 46b) may be positioned forward than the vertical plane passing through the rotation center of the second rotation shaft 44.

The lower mounting portion 46b may be positioned below the rotation center of the second rotation shaft 44. That is, the lower mounting portion 46b may be positioned below the horizontal plane passing through the rotation center of the second rotation shaft 44. With this structure, the distance between the upper mounting portion 46a and the lower mounting portion 46b can be increased in the vertical direction, and the support strength of the motor unit can be thereby increased.

The position of the lower mounting portion 46b may be higher than the lower end 46d of the motor unit 40 (the lower end of the case 46). This prevents the lower mounting portion 46b from affecting the minimum ground height of the electric two-wheeled vehicle 1.

The motor unit 40 may not necessarily have the second rotation shaft 44. In this case as well, the upper mounting portion 46a and the lower mounting portion 46b may be preferably located forward than the rotation center Cm of the electric motor 41. This structure can reduce the size in the vertical direction of the motor unit 40 as compared with the case where the upper mounting portion 46a and the lower mounting portion 46b are respectively disposed directly above and below the rotation center Cm of the electric motor 41.

### [Relative position between motor drive unit and motor unit]

The motor drive unit 30 may be disposed in front of the motor unit 40. As shown in FIG. 6, the lower mounting portion 46b may be positioned below the lower end 36d of the motor drive unit 30. This structure allows the motor unit 40 to be positioned closer to the motor drive unit 30 while avoiding interference between the lower mounting portion 46b and the motor drive unit 30. As a result, the size of the vehicle body in the longitudinal direction can be reduced. In the example of the electric two-wheeled vehicle 1, the position of the second rotation shaft 44 is also lower than the lower end 36d of the motor drive unit 30.

The front end of the lower mounting portion 46b may be positioned forward than the rear end of the motor drive unit 30. With this structure, the motor unit 40 and the motor drive unit 30 can be efficiently disposed in a small space. In the example of the electric two-wheeled vehicle 1, as shown in FIG. 6, the front end of the lower mounting portion 46b may be positioned forward than the rear end of a fin 36e formed on the rear surface of the motor drive unit 30. Unlike the example of the electric two-wheeled vehicle 1, the position of the lower mounting portion 46b may be rearward from the rear end (fin 36e) of the motor drive unit 30.

As described above, the lower mounting portion 46b may be supported by the body frame 20. The support structure of the lower mounting portion 46b may be located below the motor drive unit 30. In the example of the electric two-wheeled vehicle 1, as shown in FIG. 6, the lower cross portion 28 and the brackets 28b extending rearward from the lower cross portion 28 may be positioned below the motor drive unit 30. This enables to effectively use the space below the motor drive unit 30.

As shown in FIG. 6, the motor drive unit 30 may offset upward relative to the battery 50. That is, the center of the motor drive unit 30 in the vertical direction may be positioned above the center of the battery 50 in the vertical direction. The height of the lower surface 36f of the motor drive unit 30 may be thus above the lower surface of the battery 50. Further, a space may be formed rearward of the lower portion of the battery 50 and below the motor drive unit 30, and the lower cross portion 28 and the brackets 28b may be disposed in this space.

The relationship between the position of the motor drive unit 30 and the position of the battery 50 is not limited to the example of the electric two-wheeled vehicle 1. For example, the position of the motor drive unit 30 may not be offset upward relative to the position of the battery 50. In this case as well, if the size in the vertical direction of the motor drive unit 30 is smaller than the size in the vertical direction of the battery 50, the position of the lower surface 36f of the motor drive unit 30 is higher than the lower surface of the battery 50. As a result, the space formed behind the lower portion of the battery 50 can be effectively utilized.

### [Support structure of motor drive unit]

As shown in FIG. 2, a reinforcing portion 21E extending in the vertical direction may be disposed between the frame upper portion 21D and the frame rear portion 21C. As shown in FIG. 4B, brackets 21g and 21h extending toward the center of the vehicle width direction may be formed on the reinforcing portion 21E. The upper portion of the motor drive unit 30 (upper portion of the case 36) may be attached to the brackets 21g and 21h in the longitudinal direction. As shown in FIG. 4B, the brackets 28d may be also formed in the lower cross portion 28. The lower portion of the motor drive unit 30 may be attached to the brackets 28d in the longitudinal direction.

### [First cable harness]

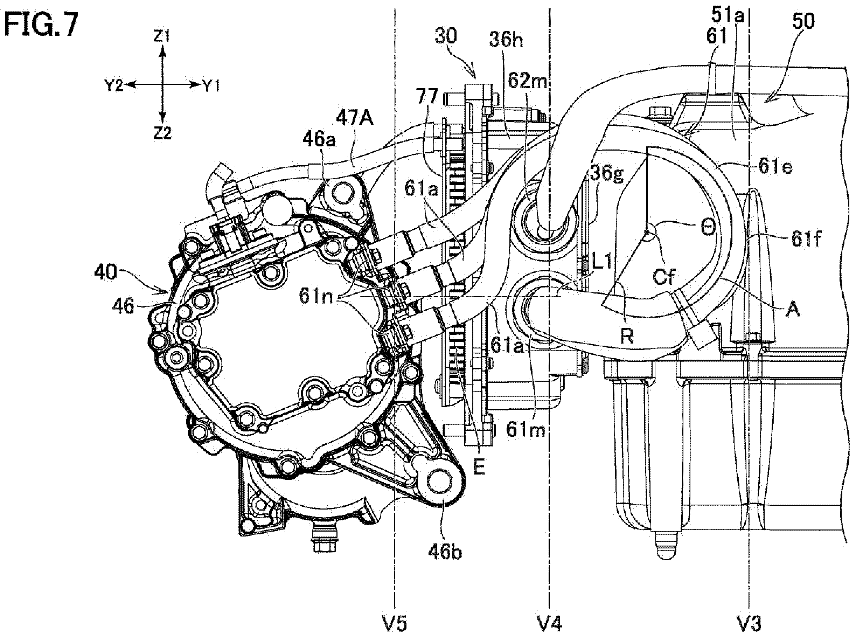

As shown in FIG. 7, the electric two-wheeled vehicle 1 has a first cable harness 61 for electrically connecting the electric motor 41 and the drive circuit 31. The power for driving the electric motor 41 is supplied from the drive circuit 31 to the electric motor 41 through the first cable harness 61. The first cable harness 61 may have a plurality of power cables 61a. The electric motor 41 may be a three-phase AC motor, for example, and the first cable harness 61 may include three power cables 61a, for example.

### [Margin of first cable harness]

The motor unit 40 may be located behind the motor drive unit 30. The length of the first cable harness 61 connecting the electric motor 41 and the drive circuit 31 may have a margin than the shortest length connecting them. As such, as shown in FIG. 7, the first cable harness 61 may have, in the middle thereof, a portion 61e located forward than the front surface 36g of the motor drive unit 30. Hereinafter, the portion 61e is referred to as a "margin".

In the assembly process of the electric two-wheeled vehicle 1, in a state where the motor drive unit 30 and the motor unit 40 are connected by the first cable harness 61, the work of mounting the motor drive unit 30 on the body frame 20 and the work of mounting the motor unit 40 on the body frame 20 may be sequentially performed. For example, before being mounted on the body frame 20, sometimes the units 40 and 30 may be connected to each other by the first cable harness 61 for inspection. In that case, the subsequent mounting operation of the units 40 and 30 will be performed in a state where the units 40 and 30 are connected by the first cable harness 61. This mounting operation is restricted by the length of the first cable harness 61. In the example of the electric two-wheeled vehicle 1, the first cable harness 61 includes the margin 61e located forward than the front surface 36g of the motor drive unit 30, and thus the length of the first cable harness 61 has a sufficient margin, and the workability of mounting the units 40 and 30 can be thereby improved.

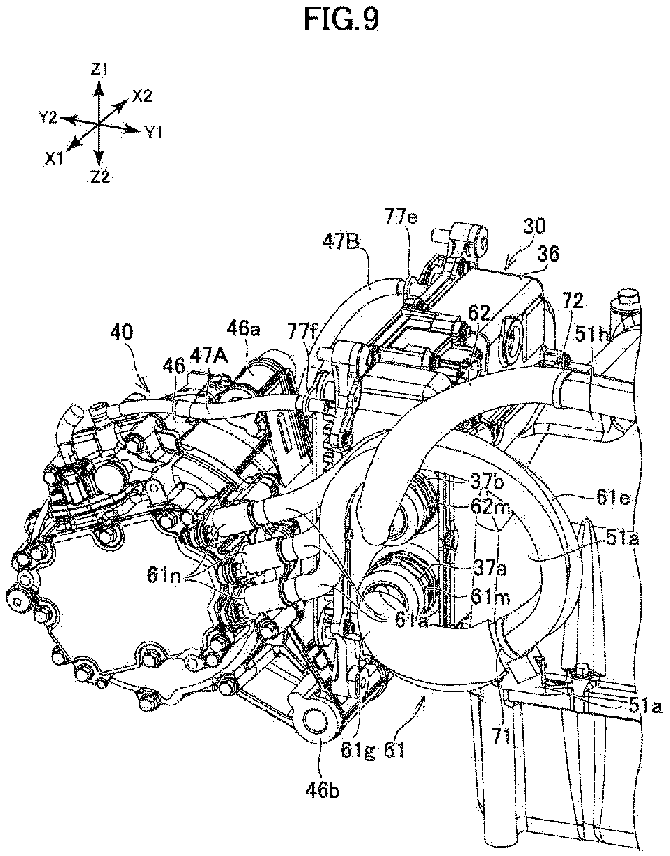

As shown in FIG. 9, one end of the first cable harness 61 may be connected to the side surface of the motor drive unit 30. A connector 61m may be provided at the end of the first cable harness 61. The connector 61m may be connected to a connector 37a provided on the side surface of the motor drive unit 30. The other end of the first cable harness 61 may be connected to the motor unit 40. As described above, the first cable harness 61 may have the three power cables 61a. A connector 61n may be provided at each of the ends of the power cables 61a. The connectors 61n may be respectively connected to the three connectors provided in the motor unit 40.

### [Details of margin]

As shown in FIG. 7, the first cable harness 61 may have a foremost portion 61f in the margin 61e. The foremost portion 61f may be a portion positioned most forwardly in the first cable harness 61. The distance between a vertical plane V3 passing through the foremost portion 61f and a vertical plane V4 passing through the connector 61m (the end on the motor drive unit 30 side ) may be longer than the distance between the vertical plane V4 passing through the connector 61m and a vertical plane V5 passing through the connector 61n (the end on the motor unit 40 side). Here, the vertical plane V4 is a vertical plane passing through the center of the connector 61m in a side view of the vehicle body. The vertical plane V5 is a vertical plane passing through the middle connector 61n of the three connectors 61n.

The margin 61e of the first cable harness 61 may be curved over 180 degrees or more in a side view of the vehicle body. In the example of the electric two-wheeled vehicle 1, as shown in FIG. 7, the margin 61e may be curved along an arc A defined around its inner center Cf. The angle θ of the arc A may be 180 degrees or more. In the example of the electric two-wheeled vehicle 1, the entire curved portion along the arc A may be positioned forward than the front surface 36g of the motor drive unit 30. Unlike the example of the electric two-wheeled vehicle 1, only a portion of the curved portion along the arc A may be positioned forward than the front surface 36g of the motor drive unit 30. Due to the curved portion, the extending direction of the first cable harness 61 is reversed in the middle of the first cable harness 61.

The radius of curvature R of the arc A along the margin 61e may be greater than three times a diameter of each power cable 61a. This prevents a large load on the power cables 61a. The radius of curvature R may be greater than four times a diameter of each power cable 61a.

As shown in FIG. 9, in the vicinity of the connector 61m on the motor drive unit 30 side, the first cable harness 61 may have a curved portion 61g that is curved in a plan view of the vehicle body. The radius of curvature of the curved portion 61g may also be greater than three times a diameter of each power cable 61a. The radius of curvature of the curved portion 61g may also be greater than four times the diameter of the power cable 61a.

As shown in FIG. 7, the connector 61n connected to the motor unit 40 may be located behind the connector 61m connected to the motor drive unit 30. In other words, the connectors 61m and 61n may be located at substantially the same height. As such, in a side view of the vehicle body, there may exist a straight line L1 along the longitudinal direction intersecting with both the connector 61m and the connector 61n. In the example of the electric two-wheeled vehicle 1, the straight line L1 may intersect the middle connector 61n of the connectors 61n on the motor unit 40 side. With this structure, the linear distance between the connectors 61m and 61n is reduced. As such, the margin of the length of the first cable harness 61 is relatively increased.

The margin 61e of the first cable harness 61 may overlap the battery 50 disposed in front of the motor drive unit 30 in a side view of the vehicle body. This allows for a compact layout of the motor unit 40, the motor drive unit 30, and the battery 50, which are aligned in the longitudinal direction. Further, the position of the first cable harness 61 can be defined by utilizing the battery 50. For example, as shown in FIG. 9, the margin 61e can be clamped to the cable mounting portion 51e formed on the side surface of the battery 50 with the use of a clamp member 71.

### [Relative position between motor drive unit and battery]

As shown in FIG. 8, the right side surface 36h of the motor drive unit 30 may be positioned closer to the center of the vehicle width direction than the right side surface 51a of the battery 50. That is, in a plan view of the vehicle body, the right side surface 36h of the motor drive unit 30 may be recessed from the right side surface 51a of the battery 50. This can provide a space behind the right portion of the battery 50. The first cable harness 61 may protrude to the right from the connector 37a provided on the right side surface 36h of the motor drive unit 30 (see FIG. 9). This arrangement of the motor drive unit 30 prevents the vehicle width from increasing due to the first cable harness 61 protruding from the right side surface 36h of the motor drive unit 30.

In the example of the electric two-wheeled vehicle 1, the motor drive unit 30 may be offset leftward relative to the battery 50. That is, the center of the motor drive unit 30 in the left-right direction may be shifted to the left from the center of the battery 50 in the left-right direction. This allows for a space behind the right portion of the battery 50 for connecting the first cable harness 61 and the left side surface 0 of and the motor drive unit 30. In this space, the end of a second cable harness 62 to be described later on the motor drive unit 30 side may also be disposed.

### [Relative position between motor drive unit and motor unit]

As shown in FIG. 8, the motor unit 40 may have a portion 40a located to the right of the right side surface 36h of the motor drive unit 30. In the following, the portion 40a will be referred to as a rightmost portion. A portion of the electric motor 41 may be disposed on the rightmost portion 40a of the motor unit 40. The connector 61n of the first cable harness 61 may be connected to the rightmost portion 40a of the motor unit 40. The first cable harness 61 may extend forward from the rightmost portion 40a of the motor unit 40 in a plan view of the vehicle body. The first cable harness 61 extends forward from the motor unit 40 as described, which serves to prevent an increase in the vehicle width.

### [Overall of first cable harness]

As shown in FIG. 7, in a side view of the vehicle body, the first cable harness 61 may extend obliquely upward and forward from the rightmost portion 40a of the motor unit 40, and may be curved over 180 degrees or more in the margin 61e. The end of the first cable harness 61 (connector 61m) may be connected to the connector 37a provided on the right side surface 36h of the motor drive unit 30.

As shown in FIG. 3, the position of the portion located forward than the front surface 36g of the motor drive unit 30 in the first cable harness 61 (highest position in the margin 61e) may be lower than the frame upper portion 21D. The position of the margin 61e (highest position in the margin 61e) may be lower than the upper end of the battery 50. In the example of the electric two-wheeled vehicle 1, the upper end of the battery 50 may be the upper end of the cable mounting portion 51h to which the second cable harness 62 to be described later is clamped.

The position and connection of the first cable harness 61 are not limited to the example of the electric two-wheeled vehicle 1. For example, the first cable harness 61 may extend obliquely upward and forward from the left portion of the motor unit 40. The first cable harness 61 may be connected to the left side surface 36i of the motor drive unit 30.

### [Example of inspection]

The first cable harness 61 has a sufficient margin 61e, which serves to improve the workability of mounting the units 40 and 30 in a case where the units 30 and 40 are connected to each other by the first cable harness 61 for inspection of the units 30 and 40 and then the units 30 and 40 are sequentially mounted on the body frame 20. The inspection performed before mounting the units 30 and 40 is, for example, an inspection of the airtightness of the case 46 of the motor unit 40 and the case 36 of the motor drive unit 30.

For example, this inspection is performed as follows: The motor unit 40 is connected to the motor drive unit 30 by the first cable harness 61. The case 46 of the motor unit 40 is connected to a breather hoses 47A and 47B (see FIG. 8) to allow air flow between the inside and the outside of the case 46. The breather hose 47A is connected to the right housing portion 46h containing the electric motor 41 in the case 46 and adjusts the atmospheric pressure therein. The breather hose 47B is connected to the left housing portion 46i containing the speed reduction mechanism 42 in the case 46 and adjusts the air pressure therein. At the time of inspection, air is pumped to the case 46 through the breather hoses 47A and 47B to inspect the airtightness of the case 46. Further, the motor unit 40 and the motor drive unit 30 are connected to each other by the first cable harness 61, and thus the airtightness of the motor drive unit 30 can also be inspected.

### [Second cable harness]

As shown in FIG. 3, the electric two-wheeled vehicle 1 may have a second cable harness 62 for electrically connecting the drive circuit 31 and the battery 50. The power may be provided from the battery 50 to the drive circuit 31 through the second cable harness 62. The second cable harness 62 may include two power cables 62a.

As shown in FIG. 8, both the first cable harness 61 and the second cable harness 62 may be disposed in the same direction from the center of the vehicle body in the left-right direction. As described above, the connector 61m of the first cable harness 61 may be connected to the connector 37a provided on the right side surface 36h of the motor drive unit 30. As shown in FIG. 9, the rear end of the second cable harness 62 is provided with the connector 62m connected to the connector 37b provided on the right side surface 36h of the motor drive unit 30. The right side surface 36h of the motor drive unit 30 is located closer to the center of the vehicle width direction from the right side surface 51a of the battery 50, and thus the space may be provided behind the right portion of the battery 50. The connector 61m of the first cable harness 61 and the connector 62m of the second cable harness 62 can be disposed using this space. This can prevent an increase in the vehicle width of the electric two-wheeled vehicle 1.

As shown in FIG. 3, the front end of the second cable harness 62 may be connected to the right side surface 51a of the battery 50. More specifically, the two power cables 62a of the second cable harness 62 may have connectors 62n at their front ends. The battery 50 may have two connectors on the right side of the lower portion of its foremost portion 50a. The connectors 62n of the second cable harness 62 may be respectively connected to the two connectors.

### [Intersection of two cable harnesses]

As shown in FIG. 7, the second cable harness 62 may be positioned to the right of the first cable harness 61. That is, the second cable harness 62 may be positioned outward in the vehicle width direction from the first cable harness 61. The second cable harness 62 may intersect the first cable harness 61 in a side view of the vehicle body and may be clamped to the battery 50 by a clamping member 72 (see FIG. 9). This prevents the first cable harness 61 from moving outward in the vehicle width direction. The component to which the second cable harness 62 is clamped may not be the battery 50. For example, the second cable harness 62 may be clamped to the body frame 20.

As shown in FIG. 7, in the example of the electric two-wheeled vehicle 1, the first cable harness 61 may extend obliquely upward and forward from the connector 61n connected to the motor unit 40. The first cable harness 61 may be then curved downward. The connector 62m of the second cable harness 62 (the connector on the motor drive unit 30 side) may be positioned above the connector 61m of the first cable harness 61. The second cable harness 62 extends upward from the connector 62m and intersect the first cable harness 61. In one example, the outer surface of the second cable harness 62 is in contact with the outer surface of the first cable harness 61, although they may not necessarily be in contact with.

The margin 61e of the first cable harness 61 may also be clamped to the battery 50 by the clamping member 71 (see FIG. 9). The position where the first cable harness 61 and the second cable harness 62 intersect is located rearward than the battery 50, and may be away from the position of the clamping member 71. That is, the second cable harness 62 may restrict the movement of the first cable harness 61 (movement to the right) at the position away from the clamp member 71.

### [Arrangement of second cable harness]

The second cable harness 62 may be disposed on the upper side of the battery 50, for example, may overlap the battery 50 in a plan view of the vehicle body. This arrangement of the second cable harness 62 prevents an increase in the vehicle width due to the second cable harness 62.

The battery 50 may have a plurality of cable mounting portions 51h (see FIG. 3) protruding upward on its upper surface. The second cable harness 62 may extend forward on the upper side of the battery 50. The second cable harness 62 may be clamped to the cable mounting portion 51h by the clamp member 72.

The cable mounting portion 51h may be positioned toward the center in the vehicle width direction than the right side surface 51a of the battery 50. As such, the second cable harness 62 is also positioned toward the center in the vehicle width direction than the right side surface 51a. As a result, the first cable harness 61 intersecting the second cable harness 62 can be positioned toward the center in the vehicle width direction.

The width of the foremost portion 50a of the battery 50 in the left-right direction may be smaller than the width at the rear portion than the foremost portion 50a. The battery 50 may have a connector on the right side of its foremost portion 50a. The second cable harness 62 may extend forward along the upper surface of the battery 50, and may be then curbed and extend downwardly along the right side of the foremost portion 50a of the battery 50. The connector 62n of the second cable harness 62 may be connected to a connector provided on the right side surface of the foremost portion 50a. Such a shape of the battery 50 and arrangement of the second cable harness 62 can prevent an increase in the vehicle width due to the second cable harness 62.

### [Other examples of cable harness arrangement]

The layout of the cable harnesses 61 and 62 is not limited to the example of the electric two-wheeled vehicle 1. For example, the first cable harness 61 may be positioned outward of the second cable harness 62 in the vehicle width direction. In this case, the first cable harness 61 can prevent the second cable harness 62 from moving outward in the vehicle width direction.

In yet another example, the cable harnesses 61 and 62 may be positioned to the left of the center in the vehicle width direction. In this case as well, the two cable harnesses 61 and 62 may intersect, and one cable harness may restrict the movement of the other cable harness (movement outward in the vehicle width direction).

In yet another example, the first cable harness 61 may extend obliquely forward and downward from the motor unit 40. The first cable harness 61 may be curved upward thereafter and connected to the right side surface 36h of the motor drive unit 30. In this case, the second cable harness 62 may be disposed along the right side surface 51a of the battery 50 to restrict the movement of the first cable harness 61. The second cable harness 62 disposed along the right side surface 51a of the battery 50 may be clamped to the frame lower portion 21B of the body frame 20.

### [Air guide for motor drive unit]

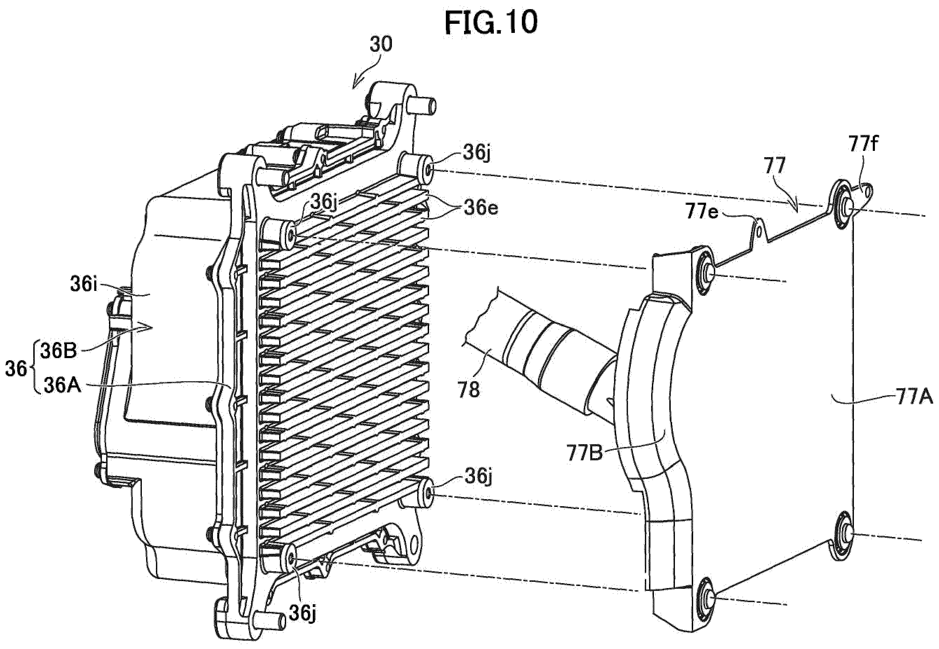

The case 36 of the motor drive unit 30 may have a heat radiating portion on the rear surface. As shown in FIG. 10, the case 36 may have a plurality of fins 36e as heat radiating portions. The case 36 may have a rear plate 36A that forms the rear surface. The fins 36e may be formed on the rear surface of the rear plate 36A. The case 36 may be box-shaped, and the drive circuit 31 (see FIG. 6) may be disposed inside the case 36. The drive circuit 31 may be attached to the rear plate 36A. The heat from the drive circuit 31 is transferred to the rear plate 36A, and can be released from the fins 36e. The case 36 may include a front case portion 36B that covers the front side of the drive circuit 31 and is combined with the rear plate 36A in the longitudinal direction. The rear plate 36A and the front case portion 36B may be formed of metal.

The size of the battery 50may be larger than the motor drive unit 30 in the vertical and left-right directions. In a front view of the vehicle body, the motor drive unit 30 may be disposed so as to overlap the battery 50. As such, when the electric two-wheeled vehicle 1 travels, at least a part of the air flow to the motor drive unit 30 is blocked by the battery 50.

As shown in FIG. 10, the electric two-wheeled vehicle 1 may include an air guide 77. The air guide 77 may include a cover portion 77A that covers the rear surface of the case 36. In the example of the electric two-wheeled vehicle 1, the cover portion 77A may cover the entire fins 36e formed on the rear surface of the case 36. Air flow path may be formed between the rear surface of the case 36 and the cover portion 77A. Each fin 36e extends in the left-right direction, and the fins 36e may be arranged in the vertical direction. The air flow path extending in the left-right direction may be provided between the cover portion 77A and the rear surface of and the case 36.

The air guide 77 may be attached to the motor drive unit 30. This structure serves to appropriately set the distance between the motor drive unit 30 and the air guide 77. In the example of the electric two-wheeled vehicle 1, the air guide 77 may be attached to the mounting portions 36j formed on the rear surface of the rear plate 36A.

As shown in FIG. 9, a plurality of mounting portions 77e and 77f may be formed on the upper edge of the air guide 77. The above-described front end of the breather hoses 47A and 47B connected to the motor unit 40 may be held by the mounting portions 77e and 77f, for example. Alternatively, the edges of the breather hoses 47A and 47B may be held by the body frame 20 (e.g., brackets 21g, 21h).

### [Projecting portion]

The air guide 77 may have a projecting portion 77B extending leftward from the cover portion 77A. The projecting portion 77B may extend to the left beyond the left side surface 36i of the motor drive unit 30. This structure can use the projecting portion 77B to deliver air to the rear surface of the case 36 so as to cool the drive circuit 31.

The direction in which the projecting portion 77B extends may not necessarily be left and may be any direction if the direction intersects the direction in which the battery 50 and the motor drive unit 30 are aligned (longitudinal direction in the example of the electric two-wheeled vehicle 1). For example, the projecting portion 77B may extend from the cover portion 77A to the right, and exceed the position of the right side surface 36h of the motor drive unit 30. As yet another example, the projecting portion 77B may extend downward from the cover portion 77A, and exceed the position of the lower surface of the motor drive unit 30. The projecting portion 77B may extend obliquely left, right, or downward.

### [Air duct]

In the example of the electric two-wheeled vehicle 1, an air duct 78 may be connected to the projecting portion 77B. The air duct 78 may extend forward from the projecting portion 77B. The front end of the air duct 78 may open forward, for example. With this structure, when the vehicle travels, the air taken in at the front end of the air duct 78 can be sent to the air guide 77 through the air duct 78. The air passes between the cover portion 77A and the rear surface of the case 36 (i.e., between the fins 36e and the cover portion 77A).

As shown in FIG. 5, the air duct 78 may be disposed above the battery 50. This prevents an increase in the vehicle width due to the air duct 78. The electric two-wheeled vehicle 1 may have a body cover 14 (see FIG. 1) covering the upper, right, and left sides of the battery 50. The air duct 78 may be disposed between the body cover 14 and the battery 50.

The front end of the air duct 78 may be located, for example, behind the front wheel 2. As shown in FIG. 1, the electric two-wheeled vehicle 1 may have a battery guard 15 located behind the front wheel 2 and in front of the battery 50. An opening 15a may be formed in the battery guard 15. The front end of the air duct 78 may be connected to the opening 15a. In a front view of the vehicle body, the opening 15a may be located between the left and right cushions 8 that support the front wheel 2.

The position of the front end (opening) of the air duct 78 is not limited to the example of the electric two-wheeled vehicle 1. For example, an opening may be formed in the vehicle cover 14 covering the right side and the left side of the battery 50, and the front end of the air duct 78 may be connected to the opening.

As shown in FIG. 8, the position of the motor drive unit 30 may be shifted to the left from the battery 50. That is, the center of the motor drive unit 30 in the left-right direction may be shifted to the left from the center of the battery 50 in the left-right direction. As such, it is easy to feed the rear surface of the case 36 by utilizing the projecting portion 77B. In the example of the electric two-wheeled vehicle 1, the left side surface 36i of the motor drive unit 30 may be positioned to the left than the left side surface 51b of the battery 50. The projecting portion 77B may extend leftward beyond the position of the left side surface 51b of the battery 50.

### [Exhaust port]

As shown in FIG. 9, an exhaust port E may be formed on the opposite side of the projecting portion 77B across the cover portion 77A covering the fins 36e. In the example of the electric two-wheeled vehicle 1, the exhaust port E may be open to the right. The air passing between the cover portion 77A and the rear surface of the case 36 (i.e., between the cover portion 77A and the fins 36e) can be discharged from the exhaust port E.

The positions of the exhaust port E and the projecting portion 77B are not limited to the example of the electric two-wheeled vehicle 1. The projecting portion 77B may extend downward from the cover portion. In this case, the exhaust port E may open upward, and each fin 36e may extend in the vertical direction. Further, the exhaust port E may open in two orthogonal directions. For example, the exhaust port E may open downward and rightward. In this case, the heat radiating portion of the case 36 may be a plurality of columnar projections instead of the fins 36e.

### [Shape of projecting portion]

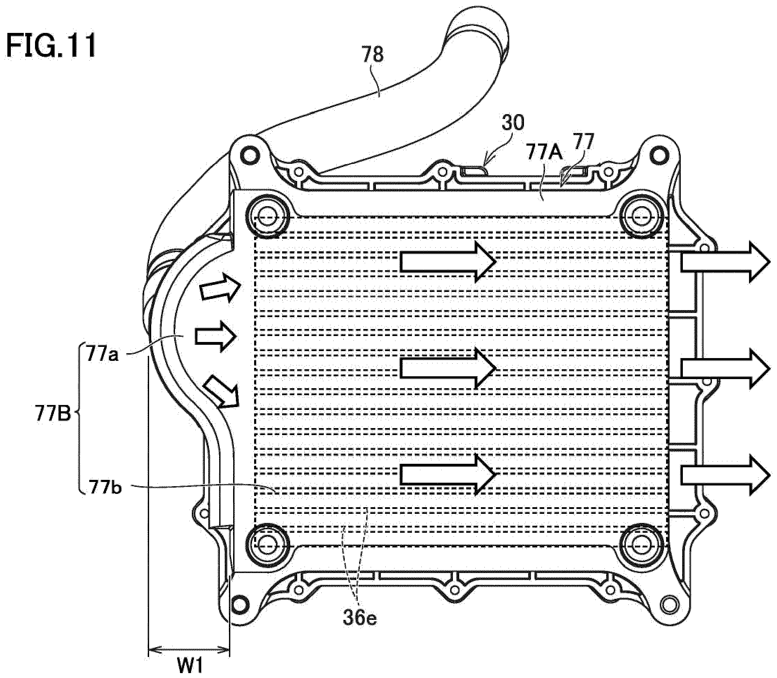

As shown in FIG. 11, the width of the projecting portion 77B (width in the left-right direction) may be smaller as it is further away from the connection position of the duct 78 upward or downward. In FIG. 11, a reference symbol W1 is attached to the maximum width of the projecting portion 77B. The width of the upper portion 77a of the projecting portion 77B may be smaller as the width approaches upward or downward. On the other hand, the width of the lower portion 77b of the projecting portion 77B may be smaller than that of the upper portion 77a, and may be constant in the vertical direction.

In the example of electric two-wheeled vehicle 1, while the motor drive unit 30 is located behind the battery 50, the air duct 78 may be located above the battery 50. As such, air introduced at the front end of the air duct 78 can flow obliquely rearward and downward. If the width of the projecting portion 77B is even from the upper end to the lower end of the cover portion 77A, air flows intensively to the lower fins 36e. In contrast, in the example of the electric two-wheeled vehicle 1, the width of the projecting portion 77B is smaller in the lower portion 77b of the cover portion 77A, and thus it is possible to prevent the air from concentrating on the lower fins 36e. In other words, the air can be sent to the entire fins 36e.

### [Variation of air guide]

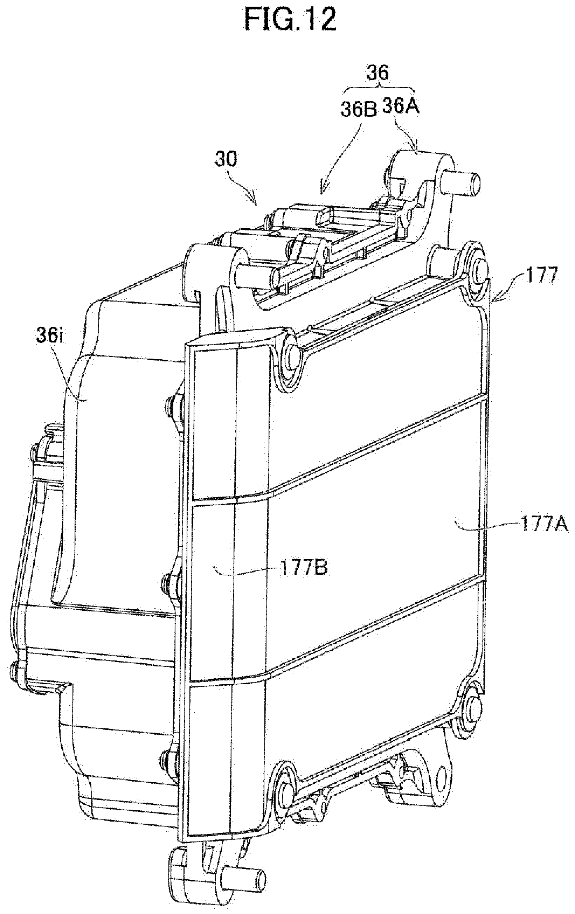

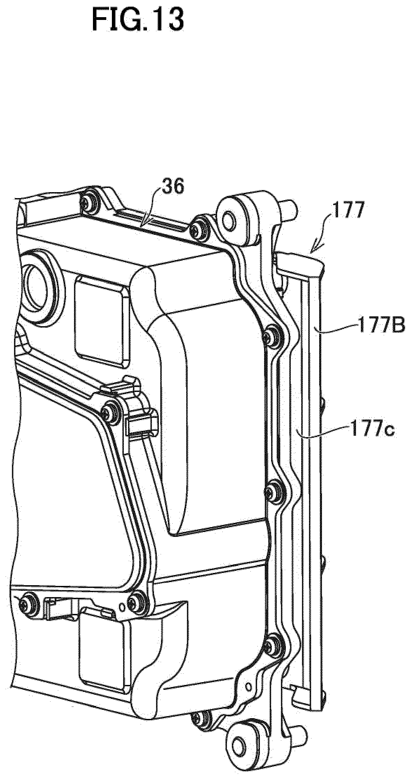

The electric two-wheeled vehicle 1 may not have the air duct 78. FIGs. 12 and 13 are diagrams illustrating examples of a structure in which the air duct 78 is not provided.

In the examples shown in FIGs. 12 and 13, an air guide 177 may be attached to the motor drive unit 30. The air guide 177 may include a projecting portion 177B extending leftward from the cover portion 177A. The projecting portion 177B may have a front surface 177c exposed forward. The edge of the projecting portion 177B may be curved forward. The projecting portion 177B may extend to the left beyond the left side surface 36i of the motor drive unit 30. When the electric two-wheeled vehicle 1 travels, air is received by the projecting portion 177B. The air is guided by the projecting portion 177B, passes between the cover portion 177A and the rear surface of the case 36, and can be discharged from the exhaust port E. The width of the projecting portion 177B may be even from the upper end to the lower end of the cover portion 177A.

As yet another example, the air guide 77 may include a right cover portion 77A and a left cover portion 77A with the exhaust port E therebetween. In this case, the air guide 77 may have the projecting portion 77B extending to the right from the cover portion 77A on the right, and the projecting portion 77B extending to the left from the cover portion 77A on the left.

### [Conclusion]

(1) The electric two-wheeled vehicle 1 includes the battery 50, the motor unit 40, the motor drive unit 30, and the first cable harness 61 electrically connecting the electric motor 41 and the drive circuit 31 to send power of the battery 50 from the drive circuit 31 to the electric motor 41. The motor unit 40 is disposed behind the motor drive unit 30. The first cable harness 61 has, in the middle thereof, a portion (margin 61e) located forward than the front surface 36g of the motor drive unit 30. The electric two-wheeled vehicle 1 can improve the workability of attaching the motor drive unit 30 and the motor unit 40 to the body frame 20.
(2) The motor drive unit 30 is disposed behind the battery 50. The margin 61e of the first cable harness 61 overlaps the battery 50 in a side view of the vehicle body. This structure allows for a compact layout of the motor unit 40, the motor drive unit 30, and the battery 50, which are aligned in the longitudinal direction.
(3) The first cable harness 61 includes the plurality of power cables 61a, and the margin 61e of the first cable harness 61 is curved. The radius of curvature R of the margin 61e may be larger than three times the diameter of the power cable 61a. This structure can prevent a large load on the power cables 61a.
(4) The first cable harness 61 has the foremost portion 61f in the margin 61e of the first cable harness 61, and has the connector 61m connected to the motor drive unit 30 and the connector 61n connected to the motor unit 40. The distance between the vertical plane V1 passing through the foremost portion 61f and the vertical plane V4 passing through the connector 61m may be longer than the distance between the vertical plane V4 passing through the connector 61m and the vertical plane V5 passing through the connector 61n. This allows for the sufficient length of the cable harness 61.
(5) The first cable harness 61 includes the curved portion that is curved over 180 degrees or more, and at least a portion of the curved portion is the margin 61e located forward than the front surface 36g of the case 36.
(6) The first cable harness 61 may have the connector 61m connected to the motor drive unit 30 and the connector 61n connected to the motor unit 40, and the connector 61n may be positioned behind the connector 61m in a side view of the vehicle body. This structure can reduce the linear distance between the connector 61m and the connector 61n, and the margin of the length of the first cable harness 61 is relatively increased.
(7) The first cable harness 61 is connected to the connector provided on the right side surface 36h of the motor drive unit 30. The right side surface 36h of the motor drive unit 30 is positioned toward the center of the vehicle body in the left-right direction than the right side surface 51a of the battery 50. This structure can prevent the vehicle width from increasing due to the first cable harness 61 protruding from the right side surface 36h of the motor drive unit 30.
(8) The motor unit 40 has a portion (rightmost portion 40a) located rightward than the right side surface 36h of the motor drive unit 30, and the first cable harness 61 extends forward from the rightmost portion 40a of the motor unit 40 in a plan view of the vehicle body. This structure can prevent the first cable harness extending forward from interfering with the motor drive unit.
(9) The center of the motor drive unit 30 in the left-right direction is offset to the left from the center of the battery 50 in the left-right direction.
(10) The first cable harness 61 and the second cable harness 62 are positioned to the right from the center of the vehicle body in the left-right direction. The second cable harness 62 is positioned to the right from the first cable harness 61, intersects the first cable harness 61 in a side view of the vehicle body, and fixed. The first cable harness 61 restricts the positional change of second cable harness 62.
(11) The second cable harness 62 is clamped to the battery 50.
(12) The position where the second cable harness 62 and the first cable harness 61 intersect is located rearward than the battery 50. This structure prevents the position of the first cable harness 61 from changing to the right at the position located rearward than the battery 50 (the position where there is no part for clamping the first cable harness).
(13) The first cable harness 61 is connected to the right side surface 36h of the motor drive unit 30, and the second cable harness 62 is connected to the right side surface 36h of the motor drive unit 30 and the right side surface 51a of the battery 50.

The structure of the electric two-wheeled vehicle proposed in the present disclosure is not limited to the example of the electric two-wheeled vehicle 1, and various modifications may be made.

For example, in the electric two-wheeled vehicle 1, the battery 50 is disposed in front of the motor drive unit 30, the units 30 and 40 are positioned below the seat 6, and the upper mounting portion 46a of the motor unit 40 is positioned forward than the first rotation shaft 43. However, the first cable harness 61 having the margin 61e (first cable harness 61 referred to in (1)) may be applied to an electric two-wheeled vehicle having a different layout. Further, the electric two-wheeled vehicle 1 may not have the air guide 77. In this case, each fin 36e formed on the rear surface of the motor drive unit 30 may extend in the vertical direction.

## Claims

1. A straddled electric vehicle comprising:
a battery (50);
a motor unit (40) including an electric motor (41) and a case (46) containing the electric motor (41);
a motor drive unit (30) including a drive circuit (31) and a case (36) containing the drive circuit (31), the drive circuit (31) configured to supply power to the electric motor (41) by utilizing power of the battery (50); and
a first cable harness (61) for electrically connecting the electric motor (41) and the drive circuit (31) and configured for sending the power of the battery (50) from the drive circuit (31) to the electric motor (41), wherein
the motor unit (40) is disposed behind the motor drive unit (30) with regard to vehicle front-rear direction (Y1-Y2), and
the first cable harness (61) has, in a middle thereof, a portion (61e) located forward than a front surface (36g) of the motor drive unit (30) with regard to the vehicle front-rear direction (Y1-Y2), **characterized in that** the motor drive unit (30) is disposed behind the battery (50) with regard to the vehicle front-rear direction (Y1-Y2), and
the portion (61e) of the first cable harness (61) overlaps the battery (50) in a side view of a vehicle body.

2. The straddled electric vehicle according to claim 1, **characterized in that** the first cable harness (61) includes a plurality of power cables (61a),
the portion (61e) of the first cable harness (61) is curved, and
a radius of curvature (R) of the portion (61e) is greater than three times a diameter of each power cable (61a).

3. The straddled electric vehicle according to claim 1 or 2, **characterized in that** the first cable harness (61) includes a first end portion connected to the motor drive unit (30) and a second end portion connected to the motor unit (40).

4. The straddled electric vehicle according to claim 3, **characterized in that** the first cable harness (61) includes a foremost portion (61f) in the portion (61e) of the first cable harness (61) with regard to the vehicle front-rear direction (Y1-Y2), and
a distance between a vertical surface passing through the foremost portion (61f) and a vertical surface passing through the first end portion is longer than a distance between the vertical surface passing through the first end portion and a vertical surface passing through the second end portion.

5. The straddled electric vehicle according to claim 3 or 4, **characterized in that** the second end portion is located behind, with regard to the vehicle front-rear direction (Y1-Y2), the first end portion in a side view of the vehicle body.

6. The straddled electric vehicle according to at least one of the claims 1 to 5, **characterized in that** the first cable harness (61) includes a portion that is curved over 180 degrees, and
at least a part of the curved portion is located forward than a front surface of the case of the motor drive unit (30) with regard to the vehicle front-rear direction (Y1-Y2).

7. The straddled electric vehicle according to at least one of the claims 1 to 6, **characterized in that** the motor drive unit (30) is disposed behind the battery (50) with regard to the vehicle front-rear direction (Y1-Y2),
each of the motor drive unit (30) and the battery (50) includes a side surface facing in a first direction, which is one of a right direction and a left direction,
the first cable harness (61) is connected to a connector provided on the side surface of the motor drive unit (30), and
the side surface of the motor drive unit (30) is located closer to a center of the vehicle body in vehicle left-right direction (X1-X2) than the side surface of the battery (50).

8. The straddled electric vehicle according to claim 7, **characterized in that** the motor unit (40) includes a portion that is located in the first direction than the side surface of the motor drive unit (30), and
the first cable harness (61) extends forward, with regard to the vehicle front-rear direction (Y1-Y2), from the portion of the motor unit (40) in a plan view of the vehicle body.

9. The straddled electric vehicle according to claim 7 or 8, **characterized in that** a center of the motor drive unit (30) in the vehicle left-right direction (X1-X2) of the vehicle body is offset in the second direction from a center of the battery (50) in the vehicle left-right direction (X1-X2) of the vehicle body.

10. The straddled electric vehicle according to at least one of the claims 1 to 9, **characterized by** a second cable harness (62) for electrically connecting the drive circuit (31) and the battery (50) and sending power of the battery (50) to the drive circuit (31).

11. The straddled electric vehicle according to claim 10, **characterized in that** the first cable harness (61) and the second cable harness (62) are located in a same direction from the center of the vehicle body in the vehicle left-right direction (X1-X2), and
one of the first cable harness (61) and the second cable harness (62) is located outward in the vehicle left-right direction (X1-X2) from the other cable harness, intersects the other cable harness in the side view of the vehicle body, and is clamped.

12. The straddled electric vehicle according to claim 10 or 11, **characterized in that** the battery (50) is located in front of the motor drive unit (30) with regard to the vehicle front-rear direction (Y1-Y2), and
the one of the cable harnesses is clamped to the battery (50).

13. The straddled electric vehicle according to at least one of the claims 10 to 12, **characterized in that** a position where the one of the cable harnesses and the other cable harness intersect is located rearward than the battery (50) with regard to the vehicle front-rear direction (Y1-Y2).

14. The straddled electric vehicle according to claim 1, **characterized by** a second cable harness (62) for electrically connecting the drive circuit (31) and the battery (50) and sending power of the battery (50) to the drive circuit (31), wherein each of the motor drive unit (30) and the battery (50) includes a side surface facing a first direction, which is one of a right direction and a left direction,
the first cable harness (61) is connected to the side surface of the motor drive unit (30), and
the second cable harness (62) is connected to the side surface of the motor drive unit (30) and the side surface of the battery (50).

## Patentansprüche

1. Ein Spreiz-Sitz-Elektro-Fahrzeug, das umfasst:
eine Batterie (50);
eine Motor-Einheit (40), die einen Elektro-Motor (41) und ein Gehäuse (46), das den Elektro-Motor (41) aufnimmt, beinhaltet;
eine Motor-Antriebs-Einheit (30), die einen Antriebs-Kreis (31) und ein Gehäuse (36), das die Antriebs-Kreis (31) aufnimmt, beinhaltet, der Antriebs-Kreis (31) ist konfiguriert, um Energie zu dem Elektro-Motor (41) zuzuführen, durch verwenden der Energie der Batterie (50); und
einen ersten Kabelbaum (61) zum elektrischen Verbinden des Elektro-Motors (41) und des Antriebs-Kreis (31), und der konfiguriert ist, um die Energie der Batterie (50) von dem Antriebs-Kreis (31) zum Elektro-Motor (41) zu leiten, wobei die Motor-Einheit (40) in Bezug auf die Fahrzeug-Vorder-Rück-Richtung (Y1-Y2) hinter der Motor-Antriebs-Einheit (30) angeordnet ist, und
der erste Kabelbaum (61) in seiner Mitte einen Abschnitt (61e) hat, der in Bezug auf die Fahrzeug-Vorder-Rück-Richtung (Y1-Y2) vor einer Vorder-Fläche (36g) der Motor-Antriebs-Einheit (30) liegt, **dadurch gekennzeichnet, dass** die Motor-Antriebs-Einheit (30) in Bezug auf die Fahrzeug-Vorder-Rück-Richtung (Y1-Y2) hinter der Batterie (50) angeordnet ist, und
der Abschnitt (61e) des ersten Kabelbaums (61) die Batterie (50) in einer Seiten-Ansicht eines Fahrzeug-Körpers überlappt.

2. Das Spreiz-Sitz-Elektro-Fahrzeug gemäß Anspruch 1, **dadurch gekennzeichnet, dass** der erste Kabelbaum (61) eine Mehrzahl von Stromkabeln (61a) beinhaltet,
der Abschnitt (61e) des ersten Kabelbaums (61) gekrümmt ist, und
ein Krümmungsradius (R) des Abschnitts (61e) größer als das Dreifache des Durchmessers jedes Stromkabels (61a) ist.

3. Das Spreiz-Sitz-Elektro-Fahrzeug gemäß Anspruch 1 oder 2, **dadurch gekennzeichnet, dass** der erste Kabelbaum (61) einen ersten Endabschnitt, der mit der Motor-Antriebs-Einheit (30) verbunden ist, und einen zweiten Endabschnitt, der mit der Motor-Einheit (40) verbunden ist, beinhaltet.

4. Das Spreiz-Sitz-Elektro-Fahrzeug gemäß Anspruch 3, **dadurch gekennzeichnet, dass** der erste Kabelbaum (61) einen vordersten Abschnitt (61f) in dem Abschnitt (61e) des ersten Kabelbaums (61) in Bezug auf die Fahrzeug-Vorder-Rück-Richtung (Y1-Y2) beinhaltet, und
ein Abstand zwischen einer vertikalen Fläche, die durch den vordersten Abschnitt (61f) verläuft, und einer vertikalen Fläche, die durch den ersten Endabschnitt verläuft, größer ist als ein Abstand zwischen der vertikalen Fläche, die durch den ersten Endabschnitt verläuft, und einer vertikalen Fläche, die durch den zweiten Endabschnitt verläuft.

5. Das Spreiz-Sitz-Elektro-Fahrzeug gemäß Anspruch 3 oder 4, **dadurch gekennzeichnet, dass** der zweite Endabschnitt in einer Seiten-Ansicht des Fahrzeug-Körpers in Bezug auf die Fahrzeug-Vorder-Rück-Richtung (Y1-Y2) hinter dem ersten Endabschnitt angeordnet ist.

6. Das Spreiz-Sitz-Elektro-Fahrzeug gemäß zumindest einem der Ansprüche 1 bis 5, **dadurch gekennzeichnet, dass** der erste Kabelbaum (61) einen Abschnitt, der um 180 Grad gekrümmt ist, beinhaltet, und
zumindest ein Teil des gekrümmten Abschnitts vor einer Vorder-Fläche des Gehäuses der Motor-Antriebs-Einheit (30) in Bezug auf die Fahrzeug-Vorder-Rück-Richtung (Y1-Y2) angeordnet ist.

7. Das Spreiz-Sitz-Elektro-Fahrzeug gemäß zumindest einem der Ansprüche 1 bis 6, **dadurch gekennzeichnet, dass** die Motor-Antriebs-Einheit (30) in Bezug auf die Fahrzeug-Vorder-Rück-Richtung (Y1-Y2) hinter der Batterie (50) angeordnet ist, jede von der Motor-Antriebs-Einheit (30) und der Batterie (50) beinhaltet eine Seiten-Fläche, die in eine erste Richtung gewandt ist, die eine von einer rechten Richtung und einer linken Richtung ist,
der erste Kabelbaum (61) ist mit einem Verbinder verbunden, der an der Seiten-Fläche der Motor-Antriebs-Einheit (30) vorgesehenen ist, und
die Seiten-Fläche der Motor-Antriebs-Einheit (30) ist näher an einem Zentrum des Fahrzeug-Körpers in Fahrzeug-Links-Rechts-Richtung (X1-X2) angeordnet als die Seiten-Fläche der Batterie (50).

8. Das Spreiz-Sitz-Elektro-Fahrzeug gemäß Anspruch 7, **dadurch gekennzeichnet, dass** die Motor-Einheit (40) einen Abschnitt beinhaltet, der in der ersten Richtung als die Seiten-Fläche der Motor-Antriebs-Einheit (30) angeordnet ist, und
der erste Kabelbaum (61) sich von dem Abschnitt der Motor-Einheit (40) in einer Draufsicht auf den Fahrzeug-Körper in Bezug auf die Fahrzeug-Vorder-Rück-Richtung (Y1-Y2) nach vorne erstreckt.

9. Das Spreiz-Sitz-Elektro-Fahrzeug gemäß Anspruch 7 oder 8, **dadurch gekennzeichnet, dass** ein Zentrum der Motor-Antriebs-Einheit (30) in der Fahrzeug-Links-Rechts-Richtung (X1-X2) des Fahrzeug-Körpers in der zweiten Richtung von einem Zentrum der Batterie (50) in der Fahrzeug-Links-Rechts-Richtung (X1-X2) des Fahrzeug-Körpers versetzt ist.

10. Das Spreiz-Sitz-Elektro-Fahrzeug gemäß zumindest einem der Ansprüche 1 bis 9, **gekennzeichnet durch** einen zweiten Kabelbaum (62) zum elektrischen Verbinden des Elektro-Motors (41) und des Antriebs-Kreis (31), und um die Energie der Batterie (50) von dem Antriebs-Kreis (31) zum Elektro-Motor (41) zu leiten.

11. Das Spreiz-Sitz-Elektro-Fahrzeug gemäß Anspruch 10, **dadurch gekennzeichnet, dass** der erste Kabelbaum (61) und der zweite Kabelbaum (62) in derselben Richtung von dem Zentrum des Fahrzeug-Körpers in der Fahrzeug-Links-Rechts-Richtung (X1-X2) angeordnet sind, und
einer von dem ersten Kabelbaum (61) und dem zweiten Kabelbaum (62) in der Fahrzeug-Links-Rechts-Richtung (X1-X2) außerhalb des anderen Kabelbaums angeordnet ist, den anderen Kabelbaum in der Seiten-Ansicht des Fahrzeug-Körpers kreuzt und festgeklemmt ist.

12. Das Spreiz-Sitz-Elektro-Fahrzeug gemäß Anspruch 10 oder 11, **dadurch gekennzeichnet, dass** die Batterie (50) in Bezug auf die Fahrzeug-Vorder-Rück-Richtung (Y1-Y2) vor der Motor-Antriebs-Einheit (30) angeordnet ist, und
der eine Kabelbaum an die Batterie (50) geklemmt ist.

13. Das Spreiz-Sitz-Elektro-Fahrzeug gemäß zumindest einem der Ansprüche 10 bis 12, **dadurch gekennzeichnet, dass** eine Position, an der sich der eine der Kabelbäume und der andere Kabelbaum kreuzen, in Bezug auf die Fahrzeug-Vorder-Rück-Richtung (Y1-Y2) hinter der Batterie (50) angeordnet ist.

14. Das Spreiz-Sitz-Elektro-Fahrzeug gemäß Anspruch 1, **gekennzeichnet durch** einen zweiten Kabelbaum (62) zum elektrischen Verbinden des Elektro-Motors (41) und des Antriebs-Kreis (31), und um die Energie der Batterie (50) von dem Antriebs-Kreis (31) zum Elektro-Motor (41) zu leiten, wobei jede der Motor-Antriebs-Einheit (30) und der Batterie (50) eine Seiten-Fläche beinhalten, die einer ersten Richtung zugewandt ist, die eine von einer rechten Richtung und einer linken Richtung ist,
der erste Kabelbaum (61) ist mit der Seiten-Fläche der Motor-Antriebs-Einheit (30) verbunden, und
der zweite Kabelbaum (62) ist mit der Seiten-Fläche der Motor-Antriebs-Einheit (30) und der Seiten-Fläche der Batterie (50) verbunden.

## Revendications

1. Véhicule électrique à selle comprenant :
une batterie (50),
une unité de moteur (40) incluant un moteur électrique (41) et un carter (46) contenant le moteur électrique (41),
une unité d'attaque de moteur (30) incluant un circuit d'attaque (31) et un carter (36) contenant le circuit d'attaque (31), le circuit d'attaque (31) étant configuré pour délivrer de la puissance au moteur électrique (41) en utilisant l'énergie de la batterie (50), et
un premier faisceau de câbles (61) destiné à relier électriquement le moteur électrique (41) et le circuit d'attaque (31) et configuré pour envoyer l'énergie de la batterie (50) du circuit d'attaque (31) au moteur électrique (41), dans lequel :
l'unité de moteur (40) est disposée derrière l'unité d'attaque de moteur (30) par rapport à la direction avant arrière (Y1 - Y2) du véhicule, et
le premier faisceau de câbles (61) possède, en son milieu, une portion (61e) située à l'avant de la surface avant (36g) de l'unité d'attaque de moteur (30) par rapport à la direction avant arrière (Y1 - Y2) du véhicule, **caractérisé en ce que** l'unité d'attaque de moteur (30) est disposée derrière la batterie (50) par rapport à la direction avant arrière (Y1 - Y2) du véhicule, et
la portion (61e) du premier faisceau de câbles (61) chevauche la batterie (50) selon une vue latérale du corps du véhicule.

2. Véhicule électrique à selle selon la revendication 1, **caractérisé en ce que** le premier faisceau de câbles (61) inclut une pluralité de câbles de puissance (61a),
la portion (61e) du premier faisceau de câbles (61) est incurvée, et
le rayon de courbure (R) de la portion (61e) est supérieur à trois fois le diamètre de chaque câble de puissance (61a).

3. Véhicule électrique à selle selon la revendication 1 ou la revendication 2, **caractérisé en ce que** le premier faisceau de câbles (61) inclut une première extrémité reliée à l'unité d'attaque de moteur (30) et une seconde extrémité reliée à l'unité de moteur (40).

4. Véhicule électrique à selle selon la revendication 3, **caractérisé en ce que** le premier faisceau de câbles (61) inclut une partie la plus en avant (61f) dans la portion (61e) du premier faisceau de câbles (61) par rapport à la direction avant arrière (Y1 - Y2) du véhicule, et
la distance entre une surface verticale traversant la partie la plus en avant (61f) et une surface verticale traversant la première extrémité est plus longue que la distance entre la surface verticale traversant la première extrémité et une surface verticale traversant la seconde extrémité.

5. Véhicule électrique à selle selon la revendication 3 ou la revendication 4, **caractérisé en ce que** la seconde extrémité est située derrière la première extrémité selon une vue latérale du corps du véhicule, par rapport à la direction avant arrière (Y1 - Y2) du véhicule.

6. Véhicule électrique à selle selon au moins l'une des revendications 1 à 5, **caractérisé en ce que** le premier faisceau de câbles (61) inclut une portion qui est incurvée sur 180 degrés, et
au moins une partie de la portion incurvée est située en avant de la surface avant du carter de l'unité d'attaque de moteur (30) par rapport à la direction avant arrière (Y1 - Y2) du véhicule.

7. Véhicule électrique à selle selon au moins l'une des revendications 1 à 6, **caractérisé en ce que** l'unité d'attaque de moteur (30) est disposée derrière la batterie (50) par rapport à la direction avant arrière (Y1 - Y2) du véhicule,
chacune de l'unité d'attaque de moteur (30) et de la batterie (50) inclut une surface latérale faisant face à une première direction, laquelle est l'une de la direction vers la droite et de la direction vers la gauche,
le premier faisceau de câbles (61) est relié à un connecteur disposé sur la surface latérale de l'unité d'attaque de moteur (30), et
la surface latérale de l'unité d'attaque de moteur (30) est située pour être plus proche du centre du corps du véhicule dans la direction gauche droite (X1 - X2) du véhicule que la surface latérale de la batterie (50).

8. Véhicule électrique à selle selon la revendication 7, **caractérisé en ce que** l'unité de moteur (40) inclut une portion qui est située plus dans la première direction que la surface latérale de l'unité d'attaque de moteur (30), et
le premier faisceau de câbles (61) s'étend vers l'avant par rapport à la direction avant arrière (Y1 - Y2) du véhicule, depuis la portion de l'unité de moteur (40) dans une vue en plan du corps du véhicule.

9. Véhicule électrique à selle selon la revendication 7 ou la revendication 8, **caractérisé en ce que** le centre de l'unité d'attaque de moteur (30), dans la direction gauche droite (X1 - X2) du véhicule du corps du véhicule, est décalé dans la seconde direction depuis le centre de la batterie (50) dans la direction gauche droite (X1 - X2) du véhicule du corps du véhicule.

10. Véhicule électrique à selle selon au moins l'une des revendications 1 à 9, **caractérisé par** un second faisceau de câbles (62) destiné à relier électriquement le circuit d'attaque (31) et la batterie (50) et à envoyer l'énergie de la batterie (50) au circuit d'attaque (31).

11. Véhicule électrique à selle selon la revendication 10, **caractérisé en ce que** le premier faisceau de câbles (61) et le second faisceau de câbles (62) sont situés dans une même direction depuis le centre du corps du véhicule dans la direction gauche droite (X1 - X2) du véhicule, et
l'un parmi le premier faisceau de câbles (61) et le second faisceau de câbles (62) est situé vers l'extérieur dans la direction gauche droite (X1 - X2) du véhicule depuis l'autre faisceau de câbles, il coupe l'autre faisceau de câbles selon la vue latérale du corps du véhicule et il est bloqué.

12. Véhicule électrique à selle selon la revendication 10 ou la revendication 11, **caractérisé en ce que** la batterie (50) est située en avant de l'unité d'attaque de moteur (30) par rapport à la direction avant arrière (Y1 - Y2) du véhicule, et
le premier des faisceaux de câbles est bloqué sur la batterie (50).

13. Véhicule électrique à selle selon au moins l'une des revendications 10 à 12, **caractérisé en ce que** la position où le premier des faisceaux de câbles et l'autre faisceau de câbles se coupent est située plus vers l'arrière que la batterie (50) par rapport à la direction avant arrière (Y1 - Y2) du véhicule.

14. Véhicule électrique à selle selon la revendication 1, **caractérisé par** un second faisceau de câbles (62) destiné à relier électriquement le circuit d'attaque (31) et la batterie (50) et à envoyer l'énergie de la batterie (50) au circuit d'attaque (31), dans lequel chacune de l'unité d'attaque de moteur (30) et de la batterie (50) inclut une surface latérale faisant face à une première direction qui est l'une parmi la direction vers la droite et la direction vers la gauche,
le premier faisceau de câbles (61) est relié à la surface latérale de l'unité d'attaque de moteur (30), et
le second faisceau de câbles (62) est relié à la surface latérale de l'unité d'attaque de moteur (30) et à la surface latérale de la batterie (50).
